# EUROPÄISCHE PATENTSCHRIFT

(11) **EP 3 321 027 B1**
(45) Veröffentlichungstag und Bekanntmachung des Hinweises auf die Patenterteilung: **20.03.2019**
(21) Anmeldenummer: 17200490.5
(22) Anmeldetag: 08.11.2017
(51) Int. Cl.: B23P 15/00, F01N 13/08, F02D 9/04, F02D 9/10, F16K 27/02

(54) **VERFAHREN ZUR HERSTELLUNG EINES KLAPPENTRÄGERS FÜR EINE ABGASKLAPPE**
METHOD FOR PRODUCING A FLAP HOLDER FOR AN EXHAUST GAS FLAP
PROCÉDÉ DE FABRICATION D'UN SUPPORT DE CLAPET POUR UN CLAPET DE GAZ D'ÉCHAPPEMENT

(30) Priorität: 14.11.2016 DE 102016121721
(43) Veröffentlichungstag der Anmeldung: 16.05.2018
(73) Patentinhaber: Eberspächer Exhaust Technology GmbH & Co. KG, 66539 Neunkirchen (DE)
(72) Erfinder: Stark, Annika, 73249 Wernau (DE); Schmitt, Steffen, 73760 Ostfildern (DE); Varelis, Stefanos, 70771 Leinfelden (DE); Hölsch, Ralf, 78736 Epfendorf (DE)
(74) Vertreter: Ruttensperger Lachnit Trossin Gomoll

(56) Entgegenhaltungen:
- DE-A1- 2 503 015
- DE-A1- 3 740 613
- JP-A- 2002 323 148
- JP-A- 2003 214 543
- JP-A- 2004 270 769
- US-A- 5 630 571

## Beschreibung

Verfahren zur Herstellung eines Klappenträgers für eine Abgasklappe, insbesondere für den Abgasstrom einer Brennkraftmaschine.

In Fig. 1 ist eine in der nachveröffentlichten europäischen Patentanmeldung EP 3 263 856 A1 offenbarte und beispielsweise in einer Abgasanlage einer Brennkraftmaschine einsetzbare Abgasklappe allgemein mit 10 bezeichnet. Dieses Dokument fällt unter Artikel 54(3) EPÜ. Der Abgasklappe 10 ist ein beispielsweise elektromotorisch arbeitender Klappenantrieb 12 zugeordnet. Eine Antriebswelle 14 des Klappenantriebs 12 ist zur gemeinsamen Drehung mit einer Schwenkwelle 16 der Abgasklappe 10 gekoppelt. Die Schwenkwelle 16 ist in ihren beiden Endbereichen 18, 20 über nicht dargestellte Lager an einem Klappengehäuse 22 um eine Schwenkachse A schwenkbar getragen.

An der Schwenkwelle 16 ist im Inneren des in diesem Ausgestaltungsbeispiel mit im Wesentlichen kreisrundem Querschnitt und entsprechend kreisrunder Innenkontur ausgestalteten Klappengehäuses 22 eine allgemein mit 24 bezeichnete Klappenblende getragen. Die Klappenblende 24 umfasst zwei mit einem jeweiligen Anbringungsbereich 26 an der Schwenkwelle 16 durch Verschweißung angebrachte Klappenflügel 28, 30.

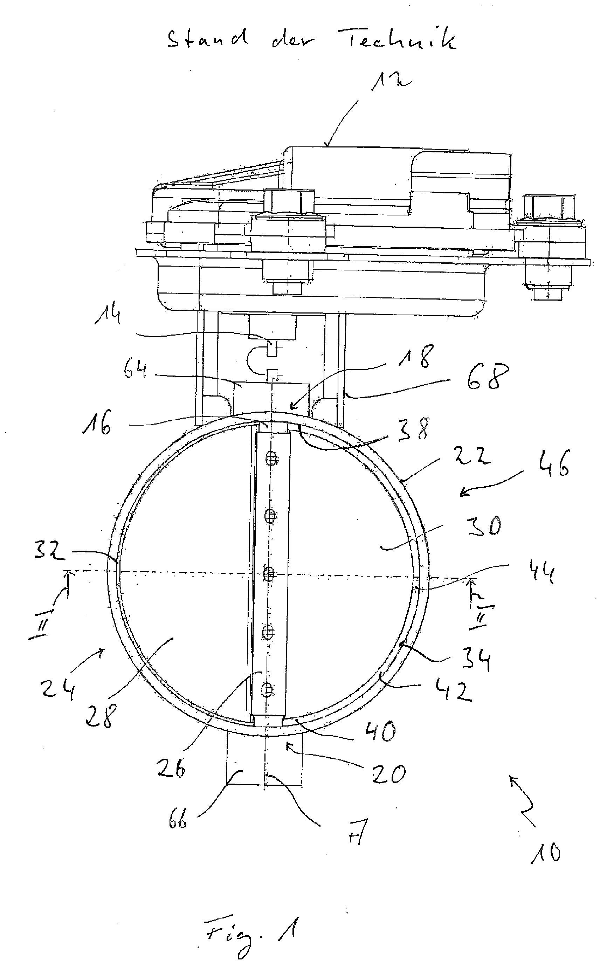

In Zuordnung zu jedem der beiden Klappenflügel 28, 30 ist am Klappengehäuse 22 ein ringsegmentartig ausgebildeter Flügelanschlag 32, 34 vorgesehen. Die beiden Flügelanschläge 32, 34 sind am Innenumfang 36 des Klappengehäuses 22 materialschlüssig festgelegt. Wie in Fig. 1 beispielsweise anhand des Flügelanschlags 34 veranschaulicht, erstreckt sich dieser unterbrechungsfrei entlang des Innenumfangs 36 des Klappengehäuses 22 ausgehend von einem dem ersten axialen Endbereich 18 der Schwenkwelle 16 nahe liegenden ersten Umfangsendbereich 38 zu einem dem zweiten axialen Endbereich 20 der Schwenkwelle 16 nahe liegenden zweiten Umfangsendbereich 40. An einer in Richtung einer Klappengehäuse-Längsachse orientierten Stirnseite 42 stellt der Flügelanschlag 34 eine Anschlagfläche 44 für den Klappenflügel 30 bereit. Auch der Flügelanschlag 32 stellt an der gegenüberliegenden Seite eine entsprechende Anschlagfläche bereit.

Es ist die Aufgabe der vorliegenden Erfindung, ein Verfahren bereitzustellen, mit welchem in einfacher Art und Weise ein zuverlässig mit einer Klappenblende einer Abgasklappe zusammenwirkender Klappenträger hergestellt werden kann.

Erfindungsgemäß wird diese Aufgabe gelöst durch ein Verfahren zur Herstellung eines Klappenträgers für eine Abgasklappe, insbesondere für den Abgasstrom einer Brennkraftmaschine, umfassend die Maßnahmen:
a) Bereitstellen eines Klappengehäuses,
b) Bereitstellen eines Anschlagrings,
c) Einsetzen des Anschlagrings in das Klappengehäuse in eine einer Einbauposition entsprechende Positionierung,
d) Festlegen des Anschlagrings am Klappengehäuse
e) nach Durchführung der Maßnahme d), Einbringen wenigstens einer Wellenöffnung für eine eine Klappenblende mit wenigstens einem Klappenflügel tragende Schwenkwelle wenigstens in den Anschlagring.

Bei dem erfindungsgemäßen Verfahren wird, bevor eine oder zwei Wellenöffnungen für eine Schwenkwelle einer Klappenblende vollständig bereitgestellt werden, der mit der Klappenblende zum Bereitstellen eines definierten Abschlusses zusammenwirkende Anschlagring am Klappengehäuse festgelegt. Diese Öffnungen werden erst nachträglich an dafür vorgesehenen Positionen derart eingebracht bzw. fertig gestellt, dass sie nicht nur das Klappengehäuse, sondern auch den Anschlagring durchsetzen und gegebenenfalls den Anschlagring in mehrere Segmente unterteilen.

Um in einfacher Weise den Anschlagring in das Klappengehäuse einsetzen zu können, wird vorgeschlagen, dass die Maßnahme a) das Bereitstellen des Klappengehäuses mit einer wenigstens bereichsweise im Wesentlichen zylindrischen Innenoberfläche umfasst, oder/und dass die Maßnahmen b) das Bereitstellen des Anschlagrings mit einer im Wesentlichen zylindrischen Außenoberfläche umfasst.

Für eine insbesondere auch unter Berücksichtigung der in einem Abgasführungssystem einer Brennkraftmaschine auftretenden mechanischen und thermischen Belastungen stabile Verbindung des Anschlagrings mit dem Klappengehäuse wird vorgeschlagen, dass die Maßnahmen a) und b) das Bereitstellen des Klappengehäuses und des Anschlagrings aus Metallmaterial umfassen, und dass die Maßnahme d) das Festlegen des Anschlagrings am Klappengehäuse durch Verschweißung umfasst.

Um den Vorgang des Zusammenbauens weiter vereinfachen zu können, wird vorgeschlagen, dass die Maßnahme a) das Bereitstellen des Klappengehäuses mit wenigstens einer Wellenöffnung umfasst. Alternativ kann vorgesehen sein, dass die Maßnahme e) das Einbringen wenigstens einer Wellenöffnung für eine eine Klappenblende mit wenigstens einem Klappenflügel tragende Schwenkwelle in das Klappengehäuse und wenigstens in den Anschlagring.

Um die Möglichkeit zu schaffen, dass eine Klappenblende mit ihren beiden Klappenflügeln bei Verschwenkung in Richtung zu einer Schließstellung mit dem Anschlagring an dessen beiden axial orientierten Stirnseiten in gleicher Weise zusammenwirken kann, wird vorgeschlagen, dass die Maßnahme e) das Einbringen wenigstens einer Wellenöffnung an einer in Richtung einer Ringlängsachse zentralen Position des Anschlagrings umfasst.

Eine stabile Schwenkhalterung für die Schwenkachse der Klappenblende kann beispielsweise dadurch gewährleistet werden, dass bei der Maßnahme e) an bezüglich einer Klappengehäuse-Längsachse des Klappengehäuses einander gegenüberliegenden Positionen jeweils eine Wellenöffnung eingebracht wird.

Wenn bei der Maßnahme e) wenigstens eine Wellenöffnung durch Laserschneiden eingebracht wird, kann eine derartige Wellenöffnung in einfacher und präziser Art und Weise bereitgestellt werden.

Bei einer baulich besonders einfach zu realisierenden Ausgestaltung wird vorgeschlagen, dass bei der Maßnahme b) der Anschlagring als geschlossener Ring bereitgestellt wird und bei der Maßnahme c) als geschlossener Ring in das Klappengehäuse eingesetzt wird.

Alternativ kann vorgesehen sein, dass bei der Maßnahme b) der Anschlagring als offener Ring bereitgestellt wird und bei der Maßnahme c) als offener Ring in das Kappenrohr eingesetzt wird. Dies ermöglicht den Zusammenbau derart, dass bei der Maßnahme b) der Anschlagring mit Außenabmessungs-Übermaß bezüglich einer Innenabmessung des Klappengehäuses bereitgestellt wird, und dass bei der Maßnahme c) der Anschlagring bezüglich einer Ringlängsachse radial komprimiert wird und nach dem Einsetzen in der Einbauposition durch radiale Aufspreizung am Klappengehäuse gehalten wird. Es müssen somit keine zusätzlichen Maßnahmen bereitgestellt werden, um vor dem festen Verbinden des Anschlagrings mit dem Klappengehäuse eine ungewünschte Relativbewegung zwischen diesen beiden Komponenten zu verhindern.

Um bei Einsatz eines offenen, also mit einem Unterbrechungsbereich bereitgestellten Anschlagrings zu vermeiden, dass in einem Bereich, in welchem dieser mit einer Klappenblende zur Bereitstellung eines Abschlusses zusammenwirkt, Leckagen entstehen, wird vorgeschlagen, dass eine das Klappengehäuse und den Anschlagring durchsetzende Wellenöffnung im Bereich eines Unterbrechungsbereichs des Anschlagrings eingebracht wird. Dabei ist es besonders vorteilhaft, wenn ein Unterbrechungsbereich des Anschlagrings zumindest bei in das Klappengehäuse eingesetztem Anschlagring in Umfangsrichtung kleiner oder gleich der Umfangserstreckung einer in den Anschlagring einzubringenden Wellenöffnung ist. Somit ist gewährleistet, dass durch das Einbringen einer Wellenöffnung auch im Anschlagring eine entsprechend dimensionierte Öffnung für den Hindurchtritt in der Schwenkwelle geschaffen wird.

Für eine stabile Lagerung der Schwenkwelle am Klappenträger wird vorgeschlagen, dass nach Durchführung der Maßnahme e) im Bereich wenigstens einer Wellenöffnung an dem Klappengehäuse wenigstens ein Wellenlageransatz vorzugsweise durch Verschweißung angebracht wird.

Die vorliegende Erfindung betrifft ferner ein Verfahren zur Herstellung einer Abgasklappe, insbesondere für den Abgasstrom einer Brennkraftmaschine, umfassend die Maßnahmen:
A) Herstellen eines Klappenträgers mit einem erfindungsgemäßen Verfahren zur Herstellung eines Klappenträger,
B) Einsetzen einer Schwenkwelle in wenigstens eine, vorzugsweise zwei an dem Klappenträger vorgesehene Wellenöffnungen,
C) Anbringen wenigstens eines, vorzugsweise zweier Klappenflügel einer Klappenblende an der Schwenkwelle derart, dass in einer Schließstellung der Klappenblende der wenigstens eine Klappenflügel an dem Anschlagring anliegt,
D) Koppeln eines Klappenantriebs für die Klappenblende mit einem über das Klappengehäuse hervorstehenden Endbereich der Schwenkwelle.

Die Erfindung wird nachfolgend mit Bezug auf die beiliegenden Figuren detailliert beschrieben. Es zeigt:
- Fig. 1: eine aus dem Stand der Technik bekannte Abgasklappe mit zugeordnetem Klappenantrieb;
- Fig. 2: einen für den Aufbau eines Kappenträgers einer Abgasklappe bereitgestellten Anschlagring;
- Fig. 3: ein für den Aufbau eines Klappenträgers einer Abgasklappe bereitgestelltes Klappengehäuse;
- Fig. 4: den in das Klappengehäuse eingesetzten und daran festgelegten Anschlagring;
- Fig. 5: einen das Klappengehäuse und den Anschlagring umfassenden Klappenträger mit in diesen eingebrachten Wellenöffnungen;
- Fig. 6: eine alternative Ausgestaltung eines Anschlagrings;
- Fig. 7: ein für den Aufbau eines Klappenträgers einer Abgasklappe bereitgestelltes Klappengehäuse mit darin vorgesehenen Wellenöffnungen;
- Fig. 8: das Klappengehäuse der Fig. 7 mit einem in dieses eingesetzten Anschlagring;
- Fig. 9: das Klappengehäuse der Fig. 7 mit darin eingesetztem Anschlagring und in diesen eingebrachten Wellenöffnungen.

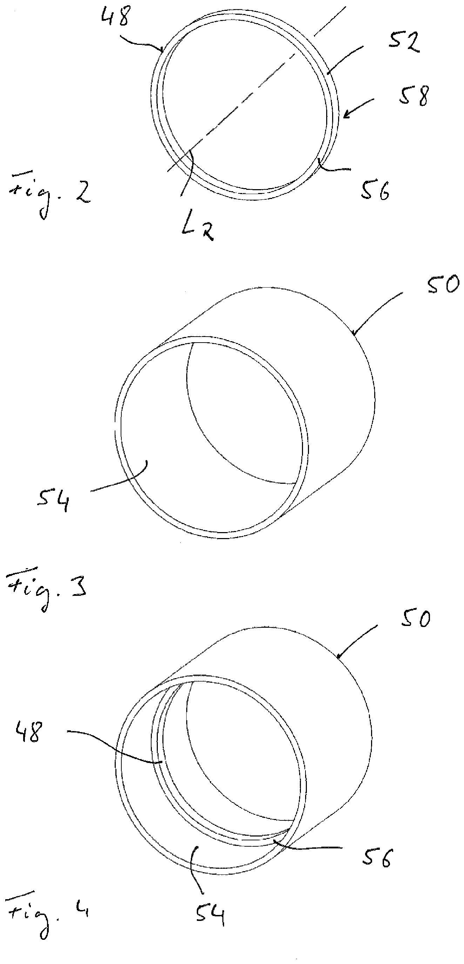

Nachfolgend wird mit Bezug auf die Fig. 2 bis 6 ein Verfahren beschrieben, mit welchem ein Klappenträger für eine Abgasklappe, wie sie beispielsweise in Fig. 1 dargestellt ist, hergestellt werden kann. Hinsichtlich des grundsätzlichen Aufbaus der mit einem derartigen erfindungsgemäß herzustellenden Klappenträger ausgestalteten Abgasklappe kann auf die voranstehenden Ausführungen zur Fig. 1 verwiesen werden.

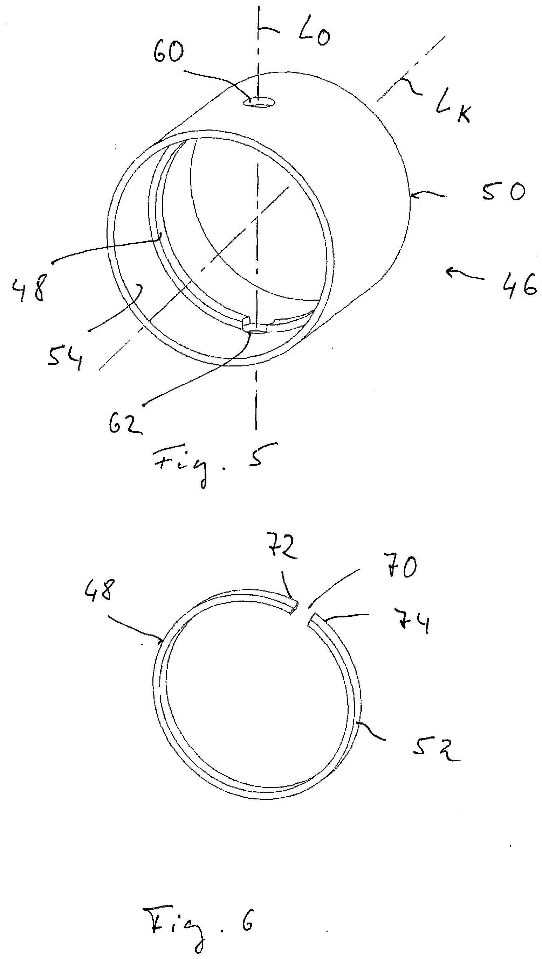

Die Fig. 2 und 3 zeigen die wesentlichen Komponenten eines in Fig. 5 dann in Zusammenbau dargestellten Klappenträgers 46 für eine Abgasklappe, beispielsweise Abgasklappe 10 der Fig. 1. Als wesentliche Komponenten werden für den Aufbau des Klappenträgers 46 ein in Fig. 2 dargestellter Anschlagring 48 und ein in Fig. 3 dargestelltes und im Wesentlichen ein Gehäuse des Klappenträgers 46 bereitstellendes Klappengehäuse 50 jeweils aus Metallmaterial bereitgestellt. In dem in Fig. 2 dargestellten Beispiel ist der Anschlagring 48 als geschlossener Ring ausgebildet und weist beispielsweise eine kreisringartige Gestalt auf. An seinem Außenumfangsbereich ist der Anschlagring 48 mit einer vorzugsweise im Wesentlichen zylindrisch gestalteten Außenoberfläche 52 aufgebaut.

Das Klappengehäuse 50 kann als ebenfalls mit kreisringartiger Struktur bereitgestellter Rohrabschnitt mit einer zumindest in dem Bereich, in dem der Anschlagring 48 anzubringen ist, im Wesentlichen zylindrischen Innenoberfläche 54 aufgebaut sein. Dabei sind der Anschlagring 48 und das Klappengehäuse 50 so aufeinander abgestimmt dimensioniert, dass der Anschlagring 48 im Wesentlichen spielfrei in das Klappengehäuse 50 eingesetzt werden kann, so dass die Außenoberfläche 52 entlang des gesamten Umfangs des Anschlagrings 48 im Wesentlichen spielfrei an der Innenoberfläche 54 des Klappengehäuses 50 anliegt.

Der Anschlagring 48 wird derart dimensioniert bereitgestellt, dass dieser in Richtung einer Ringlängsachse L_{R} eine derartige Abmessung aufweist, dass die beiden axial orientierten Stirnflächen 56, 58 desselben einen derartigen axialen Abstand zueinander aufweisen, dass bei zusammengebauter Abgasklappe die beiden Klappenflügel 28, 30 bei in der Schließstellung positionierter Klappenblende 24 mit diesen beiden Stirnflächen 56, 58 zusammenwirken, also jeweils an diesen anliegen.

Nach Bereitstellung des Anschlagrings 48 und des Klappengehäuses 50 wird in einem nächsten Arbeitsschritt der Anschlagring 48 in das Klappengehäuse 50 eingesetzt und an einer seiner im fertigen Zustand vorzusehenden Einbauposition entsprechenden Positionierung angeordnet. Durch Hilfsmittel, wie z. B. Klemmelemente oder dergleichen, kann dafür gesorgt werden, dass der in diesem Zustand noch nicht mit dem Klappengehäuse 50 fest verbundene Anschlagring 48 sich nach Anordnen in der gewünschten Positionierung nicht mehr verschiebt. Nachfolgend wird der Anschlagring 48 dann beispielsweise durch Verschweißung, vorzugsweise Laserschweißen, am Klappengehäuse 50 festgelegt. Dabei im Bereich einer oder beider Stirnflächen 56, 58 am Übergang zur Innenoberfläche 54 eine Kehlnaht gebildet werden. Um ein gegenseitiges Stören mit den an diesen Stirnflächen 56, 58 zur Anlage zu bringenden Klappenflügeln 28,30 zu vermeiden, kann beispielsweise auch vorgesehen sein, dass in Zuordnung zu jeder Stirnseite 56 bzw. 58 die Kehlnaht in demjenigen Umfangsbereich gebildet wird, in welchem kein Klappenflügel mit dieser Stirnfläche zusammenwirkt. Auch eine Verschweißung von der Gehäuseaußenseite her durch das Klappengehäuse 50 hindurch, beispielsweise durch Laserschweißen, ist möglich.

Nachdem dieser in Fig. 4 dargestellte Zustand, in welchem der Anschlagring 48 mit dem Klappengehäuse 50 fest verbunden ist, erreicht ist, werden von außen an bezüglich einer Klappengehäuse-Längsachse L_{K} einander diametral gegenüberliegenden Positionen Wellenöffnungen 60, 62 eingebracht, und zwar derart, dass sie sowohl das Klappengehäuse 50, als auch den Anschlagring 48 durchsetzen. Eine zur Klappengehäuse-Längsachse L_{K} und entsprechend auch zur Ringlängsachse L_{R} im Wesentlichen orthogonal orientierte Öffnungslängsachse L_{O} entspricht dabei im Wesentlichen der im Zusammenbauzustand vorgesehenen Schwenkachse A der Schwenkwelle 16 in Fig. 1.

Wie die Fig. 5 verdeutlicht, werden die Wellenöffnungen 60, 62 so eingebracht, dass deren Öffnungslängsachse L_{O} in einem zentralen Bereich des Anschlagrings 48 in Richtung der Ringlängsachse L_{R} liegt. Dies bedeutet, dass in axialer Richtung jede der Stirnflächen 56, 58 den gleichen axialen Abstand zur Öffnungslängsachse L_{O} und somit auch zur Schwenkachse A der Schwenkwelle 16 aufweist. Dies gewährleistet, dass jeder der an der Schwenkwelle 16 angebrachten bzw. anzubringenden Klappenflügel 28, 30 mit jeweils einer der Stirnflächen 56, 58 zum Bereitstellen eines Strömungsabschlusses zusammenwirken kann, wobei hier ein bezüglich der Schwenkachse A bzw. der Öffnungslängsachse L_{O} im Wesentlichen punkt- bzw. achsensymmetrischer Aufbau erlangt wird. Die beiden Klappenflügel 28, 30 liegen dabei axial zueinander versetzt, so dass beispielsweise der in Fig. 1 links dargestellte Klappenflügel 28 mit der Stirnfläche 56 zusammenwirken kann, während der in Fig. 1 rechts dargestellte Klappenflügel 30 mit der Stirnfläche 58 zusammenwirken kann.

Durch das Einbringen der Wellenöffnungen 60, 62, deren Öffnungsdurchmesser größer ist, als die axiale Erstreckung des Anschlagrings 48 in Richtung der Ringlängsachse L_{R}, wird der Anschlagring in die beiden in Fig. 1 dargestellten, segmentartig ausgebildeten Flügelanschläge 32, 34 unterteilt. Da der Anschlagring 48 jedoch als ein einziges Bauteil in das Klappengehäuse 50 eingebracht wird, kann der Vorgang des Zusammenbaus besonders einfach durchgeführt werden, wozu weiter beiträgt, dass die Wellenöffnungen sowohl in das Klappengehäuse 50, als auch den Anschlagring 48 erst nach dem Festlegen des Anschlagrings 48 am Klappengehäuse 50 eingebracht werden, vorzugsweise durch Laserschneiden. Es muss also beim Einbau des Anschlagrings 48 in das Klappengehäuse 50 nicht auf eine exakte Ausrichtung desselben bzw. von Ringsegmenten bezüglich Öffnungen im Klappengehäuse 50 geachtet werden.

Nach dem Einbringen der Wellenöffnungen 60, 62 können an der Außenseite des Klappengehäuses 50 in Zuordnung zu den beiden Wellenöffnungen 60, 62 in Fig. 1 erkennbare Wellenlageransätze 64, 66 angebracht werden. Diese beispielsweise rohrartig bzw. im Wesentlichen zylindrisch ausgebildeten Wellenlageransätze 64, 66 können bezüglich der Öffnungslängsachse L_{O} zentriert an der Außenseite des Klappengehäuses 50 beispielsweise durch Verschweißung festgelegt werden. In diese Wellenlageransätze 64, 66 können Wellenlager, vorzugsweise Wälzkörperlager, für die Schwenkwelle 16 eingebracht werden, um auf diese Art und Weise die Schwenkwelle 16 im Wesentlichen reibungsfrei schwenkbar am Klappenträger 56 lagern zu können.

Beim Zusammenbau der in Fig. 1 dargestellten Abgasklappe können, nachdem der Klappenträger 46 in der vorangehend beschriebenen Art und Weise hergestellt worden ist, die Schwenkwelle 16 und die in den Wellenlageransätzen 64, 66 aufzunehmenden Wellenlager angebracht werden. In ihrem axialen Endbereich 18 steht die Schwenkwelle 16 dann beispielsweise über den Wellenlageransatz 64 hervor, um dort mit der Antriebswelle 14 des Klappenantriebs 12 gekoppelt zu werden. Der Klappenantrieb 12 selbst kann durch einen diesem zugeordneten Träger 68 an der Außenseite des Klappengehäuses 12 festgelegt sein bzw. werden, beispielsweise ebenfalls durch Verschweißung.

Eine alternative Ausgestaltung eines Anschlagrings 48 ist in Fig. 6 dargestellt. Die Fig. 6 zeigt den Anschlagring als offenen Ring mit einem Unterbrechungsbereich 70. Dieser Unterbrechungsbereich ist in Umfangsrichtung des Anschlagrings 48 derart dimensioniert, dass er kleiner ist, als die entsprechende Dimensionierung der bzw. zumindest einer der in dem Klappenträger 46 vorzusehenden Wellenöffnungen 60, 62.

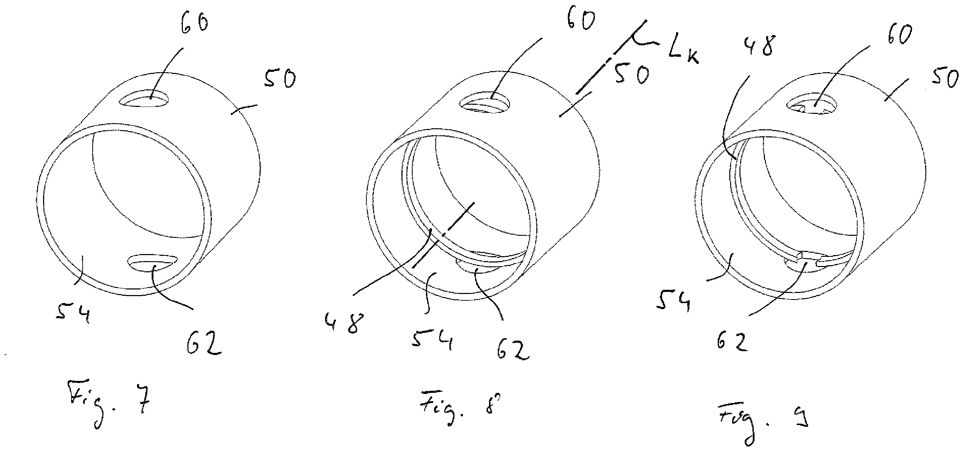

Der in Fig. 7 dargestellte Anschlagring kann zunächst so bereitgestellt werden, dass er in einem nicht komprimierten Zustand eine die Innenabmessung, beispielsweise den Innendurchmesser des Klappengehäuses 50 geringfügig übersteigende Außenabmessung, beispielsweise Außendurchmesser, aufweist. Zum Einsetzen des Anschlagrings 48 in das Klappengehäuse 50 wird der Anschlagring 48 in Umfangsrichtung und somit in radialer Richtung komprimiert. Nach dem Einsetzen des Anschlagrings 48 in das Klappengehäuse 50 kann diese axiale Kompression aufgegeben werden, so dass der Anschlagring 48 sich radial aufspreizen wird und unter Vorspannung an der Innenoberfläche 54 des Klappengehäuses 50 anliegen wird. In diesem Zustand ist der Anschlagring 48 grundsätzlich fest bezüglich des Klappengehäuses 50 gehalten, kann jedoch durch entsprechende Kraftausübung in die der Einbauposition entsprechende Positionierung gebracht werden. Weitere Maßnahmen, zum Haltern des Anschlagrings 48 bezüglich des Klappengehäuses 50 zur Herstellung der materialschlüssigen Verbindung, sind nicht erforderlich.

Bei Einsatz eines derartigen offenen Anschlagrings 48 wird bei Einbringen der Wellenöffnungen 60, 52 bzw. bereits beim Einsetzen des Anschlagrings 48 in das Klappengehäuse 50 darauf geachtet, dass im fertigen Klappenträger 46 eine der Wellenöffnungen 60, 62 dort positioniert sein wird, wo nach Einsetzen des Anschlagrings 48 in das Klappengehäuse 50 und Festlegen des Anschlagrings 48 am Klappengehäuse 50, also nach Herstellung des in Fig. 4 dargestellten Zustands, der Unterbrechungsbereich 70 positioniert sein wird. Die in diesem Bereich dann zu bildende Wellenöffnung 60 oder 62 wird so eingebracht bzw. ist derart dimensioniert, dass sie größer ist, als die Umfangserstreckung des Unterbrechungsbereichs 70 bei in das Klappengehäuse 50 eingesetztem Anschlagring 48. Beispielsweise könnte vorgesehen sein, dass diese Umfangserstreckung des Unterbrechungsbereichs 70 im Wesentlichen der axialen Erstreckung des Anschlagrings 48 entspricht oder kleiner ist, zumindest aber kleiner ist, als die Querschnittsabmessung der einzubringenden Wellenöffnung. Wird die Wellenöffnung 60 oder 62 dann in das Klappengehäuse 50 bzw. den Anschlagring 48 eingebracht, wird auch in den zwischen sich den Unterbrechungsbereich 70 bildenden Endbereichen 72, 74 der Anschlagring 48 mit der Querschnittskontur der dort zu bildenden Wellenöffnung 60 oder 62 entsprechender Kontur der Endbereiche 72, 74 bereitgestellt. Im Bereich der anderen zu bildenden Wellenöffnung wird der Anschlagring 48 in der vorangehend beschriebenen Art und Weise in zwei die Flügelanschläge 32, 34 bereitstellende Segmente unterteilt.

Die Fig. 7 bis 9 veranschaulichen eine alternative Vorgehensweise zum Aufbau eines Klappenträgers für eine Abgasklappe.

Die Fig. 7 zeigt das Klappengehäuse 50 bevor der Anschlagring 48 in dieses eingesetzt und daran festgelegt wird. In dieses Klappengehäuse 50 sind bereits Wellenöffnungen 60, 62 eingebracht, beispielsweise durch Laserschneiden, durch welche hindurch die beispielsweise in Fig. 1 dargestellte Schwenkwelle 16 nach Zusammenbau der Abgasklappe sich erstrecken wird.

Nachdem das Klappengehäuse 50 mit den darin bereits vorgesehenen Wellenöffnungen 60, 62 bereitgestellt wurde, wird der Anschlagring 48, entweder als offener oder als geschlossener Ring, in das Klappengehäuse 50 eingesetzt, so dass er an der Innenoberfläche 54 desselben anliegt und beispielsweise durch Laserschweißen daran festgelegt wird. Dabei wird der Anschlagring 48 so positioniert, dass er in Richtung der Klappengehäuse-Längsachse L_{K} mittig bezüglich der Wellenöffnungen 60, 62 im Klappengehäuse 50 positioniert ist. Nach Positionieren und Festlegen des Anschlagrings 48 in dieser Positionierung werden die Wellenöffnungen 60, 62 auch in den Anschlagring 48 eingebracht. Dabei können die im Anschlagring 48 vorgesetzten Wellenöffnungen 60, 62 einen kleineren Durchmesser bzw. eine kleinere Querabmessung aufweisen, als im Klappengehäuse 50. Dies veranschaulicht die Fig. 9.

Nach Einbringen der Wellenöffnung 60, 62 auch in den Anschlagring 48 können dann die vorangehend mit Bezug auf die Fig. 1 bereits beschriebenen Wellenlageransätze bzw. Lagerbuchsen 64, 66 in die Wellenöffnungen 60, 62 eingesetzt werden, so dass sie am Anschlagring 48 anstehen und somit nicht über die Innenoberfläche 54 des Klappengehäuses 50 hervorstehen. Dabei weisen vorzugsweise die Wellenlageransätze 64, 66 eine an die gekrümmte Kontur der Innenoberfläche 54 eingepasste und somit die Innenoberfläche 54 fortsetzende gekrümmte Kontur an einer ihrer Stirnseiten auf. Die Wellenlageransätze 64, 66 können dann beispielsweise durch Laserschweißen am Klappengehäuse 50 festgelegt werden. Der Klappenträger ist dann fertig und bereit zum Einsetzen der Schwenkwelle 16.

In der vorangehend beschriebenen Art und Weise wird es möglich, einen Klappenträger für eine Abgasklappe in besonders einfacher Art und Weise derart herzustellen, dass eine mit zwei Klappenflügeln ausgestaltete Klappenblende zuverlässig mit dem Anschlagring zusammenwirken kann, um in einer Schließstellung der Klappenblende durch an dem Anschlagring bzw. Segmenten desselben anliegende Klappenflügel einen zuverlässigen Abschluss des Strömungswegs im Inneren des Klappengehäuses bereitzustellen. Somit wird auch die akustische Dichtigkeit einer mit einem derartigen Klappenträger aufgebauten Abgasklappe deutlich verbessert, was zu einem entsprechend geminderten Geräuschpegel außerhalb der Abgasklappe bzw. des Klappenträgers führt. Dazu trägt insbesondere bei, dass der Anschlagring im Bereich der Wellenöffnungen durch das nachträgliche Einbringen dieser Wellenöffnungen in das Klappengehäuse und den Klappenring so gestaltet bzw. dimensioniert werden kann, dass er bis unmittelbar an den Außenumfang der in diese Wellenöffnungen einzusetzenden Schwenkwelle herangeführt werden kann und nahezu kein für den Hindurchtritt von Abgasen und Schall offener Zwischenraum verbleibt.

## Patentansprüche

1. Verfahren zur Herstellung eines Klappenträgers für eine Abgasklappe, insbesondere für den Abgasstrom einer Brennkraftmaschine, umfassend die Maßnahmen:
a) Bereitstellen eines Klappengehäuses (50),
b) Bereitstellen eines Anschlagrings (48),
c) Einsetzen des Anschlagrings (48) in das Klappengehäuse (50) in eine einer Einbauposition entsprechende Positionierung,
d) Festlegen des Anschlagrings (48) am Klappengehäuse (50),
e) nach Durchführung der Maßnahme d), Einbringen wenigstens einer Wellenöffnung (60, 62) für eine eine Klappenblende (24) mit wenigstens einem Klappenflügel (28, 30) tragende Schwenkwelle (16) wenigstens in den Anschlagring (48).

2. Verfahren nach Anspruch 1, **dadurch gekennzeichnet, dass** die Maßnahme a) das Bereitstellen des Klappengehäuses (50) mit einer wenigstens bereichsweise im Wesentlichen zylindrischen Innenoberfläche (54) umfasst, oder/und dass die Maßnahmen b) das Bereitstellen des Anschlagrings (48) mit einer im Wesentlichen zylindrischen Außenoberfläche (58) umfasst.

3. Verfahren nach Anspruch 1 oder 2, **dadurch gekennzeichnet, dass** die Maßnahmen a) und b) das Bereitstellen des Klappengehäuses (50) und des Anschlagrings (48) aus Metallmaterial umfassen, und dass die Maßnahme d) das Festlegen des Anschlagrings (48) am Klappengehäuse (50) durch Verschweißung umfasst.

4. Verfahren nach einem der vorangehenden Ansprüche, **dadurch gekennzeichnet, dass** die Maßnahme a) das Bereitstellen des Klappengehäuses mit wenigstens einer Wellenöffnung (60, 62) umfasst.

5. Verfahren nach einem der Ansprüche 1-3, **dadurch gekennzeichnet, dass** die Maßnahme e) das Einbringen wenigstens einer Wellenöffnung (60, 62) für eine eine Klappenblende (24) mit wenigstens einem Klappenflügel (28, 30) tragende Schwenkwelle (16) in das Klappengehäuse und wenigstens in den Anschlagring (48).

6. Verfahren nach einem der vorangehenden Ansprüche, **dadurch gekennzeichnet, dass** die Maßnahme e) das Einbringen wenigstens einer Wellenöffnung (60, 62) an einer in Richtung einer Ringlängsachse (L_{R}) zentralen Position des Anschlagrings (48) umfasst.

7. Verfahren nach einem der vorangehenden Ansprüche, **dadurch gekennzeichnet, dass** bei der Maßnahme e) an bezüglich einer Klappengehäuse-Längsachse (L_{R}) des Klappengehäuses (50) einander gegenüberliegenden Positionen jeweils eine Wellenöffnung (60, 62) eingebracht wird.

8. Verfahren nach einem der vorangehenden Ansprüche, dass bei der Maßnahme e) wenigstens eine Wellenöffnung (60, 62) durch Laserschneiden eingebracht wird.

9. Verfahren nach einem der vorangehenden Ansprüche, **dadurch gekennzeichnet, dass** bei der Maßnahme b) der Anschlagring (48) als geschlossener Ring bereitgestellt wird und bei der Maßnahme c) als geschlossener Ring in das Klappengehäuse (50) eingesetzt wird.

10. Verfahren nach einem der Ansprüche 1-8, **dadurch gekennzeichnet, dass** bei der Maßnahme b) der Anschlagring (48) als offener Ring bereitgestellt wird und bei der Maßnahme c) als offener Ring in das Kappenrohr (50) eingesetzt wird.

11. Verfahren nach Anspruch 10, **dadurch gekennzeichnet, dass** bei der Maßnahme b) der Anschlagring (48) mit Außenabmessungs-Übermaß bezüglich einer Innenabmessung des Klappengehäuses (50) bereitgestellt wird, und dass bei der Maßnahme c) der Anschlagring (48) bezüglich einer Ringlängsachse (L_{R}) radial komprimiert wird und nach dem Einsetzen in der Einbauposition durch radiale Aufspreizung am Klappengehäuse (50) gehalten ist.

12. Verfahren nach Anspruch 10 oder 11, **dadurch gekennzeichnet, dass** bei der Maßnahme e) eine den Anschlagring (48) durchsetzende Wellenöffnung (60, 62) im Bereich eines Unterbrechungsbereichs des Anschlagrings (48) eingebracht wird.

13. Verfahren nach Anspruch 10, 11 oder 12, **dadurch gekennzeichnet, dass** ein Unterbrechungsbereich (70) des Anschlagrings (48) zumindest bei in das Klappengehäuse (50) eingesetztem Anschlagring (48) in Umfangsrichtung kleiner oder gleich der Umfangserstreckung einer in den Anschlagring (48) einzubringenden Wellenöffnung (60, 62) ist.

14. Verfahren nach einem der vorangehenden Ansprüche, **dadurch gekennzeichnet, dass** nach Durchführung der Maßnahme e) im Bereich wenigstens einer Wellenöffnung (60, 62) an dem Klappengehäuse (50) wenigstens eine Lagerbuchse (64, 66) vorzugsweise durch Verschweißung angebracht wird.

15. Verfahren zur Herstellung einer Abgasklappe, insbesondere für den Abgasstrom einer Brennkraftmaschine, umfassend die Maßnahmen:
A) Herstellen eines Klappenträgers (46) mit einem Verfahren nach einem der vorangehenden Ansprüche,
B) Einsetzen einer Schwenkwelle (16) in wenigstens eine, vorzugsweise zwei an dem Klappenträger (46) vorgesehene Wellenöffnungen (60, 62),
C) Anbringen wenigstens eines, vorzugsweise zweier Klappenflügel (28, 30) einer Klappenblende (24) an der Schwenkwelle (16) derart, dass in einer Schließstellung der Klappenblende (24) der wenigstens eine Klappenflügel (28, 30) an dem Anschlagring (48) anliegt,
D) Koppeln eines Klappenantriebs (12) für die Klappenblende (24) mit einem über das Klappengehäuse (50) hervorstehenden Endbereich (18) der Schwenkwelle (16).

## Claims

1. Method for manufacturing a flap carrier for an exhaust gas flap, especially for the exhaust gas stream of an internal combustion engine, comprising the steps:
a) provision of a flap housing (50),
b) provision of a stop ring (48),
c) insertion of the stop ring (48) into the flap housing (50) in a position corresponding to an installed position,
d) fixing of the stop ring (48) to the flap housing (50),
e) after carrying out step d), insertion of at least one shaft opening (60, 62) at least into the stop ring (48) for a pivot shaft (16) carrying a flap diaphragm (24) with at least one flap wing (28, 30).

2. Method in accordance with claim 1, **characterized in that** step a) comprises the provision of the flap housing (50) with an inner surface (54), which is essentially cylindrical in at least some areas, or/and that step b) comprises provision of the stop ring (48) with an essentially cylindrical outer surface (58).

3. Method in accordance with claim 1 or 2, **characterized in that** steps a) and b) comprise the provision of the flap housing (50) and of the stop ring (48) made of a metal material, and that step d) comprises the fixing of the stop ring (48) to the flap housing (50) by means of welding.

4. Method in accordance with one of the above claims, **characterized in that** step a) comprises the provision of the flap housing with at least one shaft opening (60, 62).

5. Method in accordance with one of the claims 1-3, **characterized in that** step e) comprises the insertion of at least one shaft opening (60, 62) into the flap housing and at least into the stop ring (48) for a pivot shaft (16) carrying a flap diaphragm (24) with at least one flap wing (28, 30).

6. Method in accordance with one of the above claims, **characterized in that** step e) comprises the insertion of at least one shaft opening (60, 62) at a central position of the stop ring (48) in the direction of a ring longitudinal axis (L_{R}).

7. Method in accordance with one of the above claims, **characterized in that** in step e), a shaft opening (60, 62) each is inserted at positions located opposite one another in relation to a flap housing longitudinal axis (L_{R}) of the flap housing (50).

8. Method in accordance with one of the above claims, **characterized in that** in step e) at least one shaft opening (60, 62) is inserted by means of laser cutting.

9. Method in accordance with one of the above claims, **characterized in that** the stop ring (48) is provided as a closed ring in step b) and it is inserted as a closed ring into the flap housing (50) in step c).

10. Method in accordance with one of the claims 1-8, **characterized in that** the stop ring (48) is provided as an open ring in step b) and is inserted as an open ring into the flap tube (50) in step c).

11. Method in accordance with claim 10, **characterized in that** the stop ring (48) is provided with an external dimension oversize in relation to an internal dimension of the flap housing (50) in step b), and that the stop ring (48) is compressed radially in relation to a ring longitudinal axis (L_{R}) and after the insertion is held in the installed position by means of spreading open radially at the flap housing (50) in step c).

12. Method in accordance with claim 10 or 11, **characterized in that** a shaft opening (60, 62) passing through the stop ring (48) is inserted in the area of an interruption area of the stop ring (48) in step e).

13. Method in accordance with claim 10, 11 or 12, **characterized in that** an interruption area (70) of the stop ring (48) is smaller than or equal to the circumferential extension of a shaft opening (60, 62) to be inserted into the stop ring (48) at least when the stop ring (48) is inserted into the flap housing (50) in the circumferential direction.

14. Method in accordance with one of the above claims, **characterized in that** after carrying out step e), at least one bearing bush (64, 66) is mounted, preferably by means of welding, on the flap housing (50) in the area of at least one shaft opening (60, 62).

15. Method for manufacturing an exhaust gas flap, especially for the exhaust gas stream of an internal combustion engine, comprising the steps:
A) Manufacturing of a flap carrier (46) using a method in accordance with one of the above claims,
B) insertion of a pivot shaft (16) into at least one, preferably into two shaft openings (60, 62) provided at the flap carrier (46),
C) mounting of at least one, preferably two flap wings (28, 30) of a flap diaphragm (24) at the pivot shaft (16) such that the at least one flap wing (28, 30) is in contact with the stop ring (48) in a closed position of the flap diaphragm (24), and
D) coupling of a flap drive (12) for the flap diaphragm (24) with one end area (18) of the pivot shaft (16) protruding over the flap housing (50).

## Revendications

1. Procédé de fabrication d'un support de clapet pour un clapet de gaz d'échappement, en particulier pour le courant de gaz d'échappement d'un moteur à combustion interne, comprenant les mesures suivantes :
a) mettre à disposition un boîtier de clapet (50);
b) mettre à disposition un anneau d'arrêt (48),
c) insertion de l'anneau d'arrêt (48) dans le boîtier de clapet (50) dans une position correspondant à une position de montage,
d) fixation de l'anneau d'arrêt (48) au boîtier de clapet (50),
e) après la réalisation de l'étape d), insertion d'au moins une ouverture d'arbre (60, 62) au moins dans l'anneau d'arrêt (48) pour un arbre de pivotement (16) supportant un diaphragme de clapet (24) avec au moins une aile de clapet (28, 30).

2. Procédé selon la revendication 1, **caractérisé en ce que** l'étape a) comprend mettre à disposition le boîtier de clapet (50) avec une surface intérieure (54), qui est au moins partiellement essentiellement cylindrique, ou/et **en ce que** l'étape b) comprend mettre à disposition l'anneau d'arrêt (48) avec une surface extérieure essentiellement cylindrique (58).

3. Procédé selon la revendication 1 ou 2, **caractérisé en ce que** les étapes a) et b) comprennent mettre à disposition le boîtier de clapet (50) et l'anneau d'arrêt (48) en matériau métallique, et **en ce que** l'étape d) comprend la fixation de l'anneau d'arrêt (48) au boîtier de clapet (50) par soudure.

4. Procédé selon une des revendications précédentes, **caractérisé en ce que** l'étape a) comprend mettre à disposition le boîtier de clapet avec au moins une ouverture d'arbre (60, 62).

5. Procédé selon une des revendications 1-3, **caractérisé en ce que** l'étape e) comprend l'insertion d'au moins d'une ouverture d'arbre (60, 62) dans le boîtier de clapet et au moins dans l'anneau d'arrêt (48) pour un arbre de pivotement (16) supportant un diaphragme de clapet (24) avec au moins une aile de clapet (28, 30).

6. Procédé selon une des revendications précédentes, **caractérisé en ce que** l'étape e) comprend l'insertion d'au moins d'une ouverture d'arbre (60, 62) à une position centrale de l'anneau d'arrêt (48) dans le sens d'un axe longitudinal de l'anneau (L_{R}).

7. Procédé selon une des revendications précédentes, **caractérisé en ce que** dans l'étape e), une ouverture d'arbre respective (60, 62) est insérée dans des positions opposées par rapport à un axe longitudinal du boîtier de clapet (L_{R}) du boîtier de clapet (50).

8. Procédé selon une des revendications précédentes, **caractérisé en ce que** dans l'étape e) au moins une ouverture d'arbre (60, 62) est insérée par découpage laser.

9. Procédé selon une des revendications précédentes, **caractérisé en ce que** dans l'étape b) l'anneau d'arrêt (48) est prévu sous forme d'un anneau fermé b) et **en ce que** dans l'étape c) il est inséré dans le boîtier de clapet (50) sous forme d'un anneau fermé.

10. Procédé selon une des revendications 1-8, **caractérisé en ce que** dans l'étape b) l'anneau d'arrêt (48) est prévu sous forme d'un anneau ouvert et **en ce que** dans l'étape c) il est inséré dans le tube de clapet (50) sous forme d'un anneau ouvert.

11. Procédé selon la revendication 10, **caractérisé en ce que** dans l'étape b) l'anneau d'arrêt (48) est prévu avec un surdimensionnement de la dimension extérieure par rapport à une dimension intérieure du boîtier de clapet (50) et **en ce que** dans l'étape c) l'anneau d'arrêt (48) est comprimé radialement par rapport à un axe longitudinal de l'anneau (L_{R}) et est supporté au boîtier de clapet (50) par écartement radial après l'insertion dans la position de montage.

12. Procédé selon la revendication 10 ou 11, **caractérisé en ce que** dans l'étape e) une ouverture d'arbre (60, 62) passant à travers l'anneau d'arrêt (48) est insérée dans la région d'une zone d'interruption de l'anneau d'arrêt (48).

13. Procédé selon la revendication 10, 11 ou 12, **caractérisé en ce qu'**une zone d'interruption (70) de l'anneau d'arrêt (48), au moins dans le cas d'un anneau d'arrêt (48) inséré dans le boîtier de clapet (50) dans le sens circonférentiel est plus petite ou égale à l'extension circonférentiel d'une ouverture d'arbre (60, 62) à insérer dans l'anneau d'arrêt (48).

14. Procédé selon une des revendications précédentes, **caractérisé en ce qu'**après la réalisation de l'étape e), dans la région d'au moins une ouverture d'arbre (60, 62), au moins un coussinet de palier (64, 66) est attaché au boîtier de clapet (50), de préférence par soudure.

15. Procédé pour la fabrication d'un clapet de gaz d'échappement, en particulier pour le courant de gaz d'échappement d'un moteur à combustion interne, comprenant les mesures suivantes :
A) fabrication d'un support de clapet (46) par un procédé selon une des revendications précédentes,
B) insertion d'un arbre de pivotement (16) dans au moins une, de préférence deux ouvertures d'arbre (60, 62) prévues au support de clapet (46),
C) montage d'au moins une, de préférence de deux ailes de clapet (28, 30) d'un diaphragme de clapet (24) à l'arbre de pivotement (16) de sorte que ladite au moins une aile de clapet (28, 30) est en appui contre l'anneau d'arrêt (48) dans une position de fermeture du diaphragme de clapet (24),
D) accouplement d'un entraînement de clapet (12) pour le diaphragme de clapet (24) avec une région d'extrémité (18) de l'arbre de pivotement (16) dépassant le boîtier de clapet (50).
